# DEMANDE DE BREVET EUROPEEN

(11) **EP 0 798 274 A1**
(43) Date de publication de la demande: **01.10.1997**
(21) Numéro de dépôt: 97420050.3
(22) Date de dépôt: 26.03.1997
(51) Int. Cl.: C04B 28/12

(54) **Enduits monocouches d'imperméabilisation**

(30) Priorité: 28.03.1996 FR 9604132
(71) Demandeur: Lafarge Produits Formules S.A., 92120 Montrouge (FR)
(72) Inventeur: Bonnet, François, 77210 Avon (FR); Pinganaud, Gilles, Atlanta, Georgia 30338 (US); Collard, Jean-Luc, 77590 Bois le Roi (FR); Bazin, Philippe, 91720 Boigneville (FR); Tricaud, Marie-France, 38300 Saint Savin (FR)
(74) Mandataire: Tilloy, Anne-Marie

(57) **Abrégé**

La présente invention a pour objet des enduits monocouche d'imperméabilisation renfermant notamment un liant constitué essentiellement de ciment Portland en faibles proportions, et de chaux hydraulique naturelle.

La présente invention a également pour objet un procédé de réalisation de ces enduits monocouche d'imperméabilisation au moyen d'une machine à projeter.

De façon avantageuse, certains de ces enduits sont spécialement adaptés pour tous types de supports en maçonnerie ou en béton, y compris les supports anciens de faible cohésion.

## Description

La présente invention a pour objet une nouvelle famille d'enduits monocouche d'imperméabilisation de façades et plus spécialement une nouvelle famille d'enduits monocouche d'imperméabilisation de façades bien adaptés au bâti ancien.

Par le terme monocouche, on entend, dans le cadre de la présente invention, une couche réalisée en une ou plusieurs passes successives frais sur frais d'un même produit, c'est-à-dire que l'on observe un temps d'attente entre les passes permettant un raffermissement suffisant du mortier pour qu'il supporte la passe suivante sans glissement ni chute. Dans le cadre de l'invention, le temps d'attente entre les passes n'excède pas 24 heures.

Les enduits monocouche ont essentiellement pour fonction le dressage, l'imperméabilisation et la décoration des parois extérieures verticales ou inclinées de moins de 10° par rapport à la verticale, en maçonnerie ou en béton.

### Etat de la technique

Aujourd'hui, on distingue deux familles de mortiers destinés à la réalisation des enduits extérieurs de façades :
1- la famille des mortiers de ciment et/ou de chaux, composés suivant les recommandations du Document Technique Unifié (D.T.U). n° 26.1 de mai 1990. Ces mortiers, préparés directement sur chantiers ou en usine, sont exécutés :
   - en trois couches minimum dans le cas d'une application manuelle ;
   - en deux couches minimum dans le cas d'une projection mécanique.

   Ces couches ne dépassent généralement pas 10 mm d'épaisseur. En outre, leur application est espacée dans le temps, généralement de plusieurs jours, voire de plusieurs semaines si le liant utilisé est quasiment exclusivement constitué de chaux aérienne éteinte, ceci afin d'attendre la fin d'un durcissement suffisant de l'enduit ainsi que de lui laisser faire la plus grande partie de son retrait.
   L'imperméabilité à l'eau est dans ce cas assurée par la superposition des couches, grâce aux coupures de capillarité obtenues entre chaque couche.
   Ces enduits exécutés en plusieurs couches présentent plusieurs inconvénients :
   - la lenteur d'exécution puisqu'une attente de plusieurs jours entre l'application de chaque couche est indispensable pour éviter la fissuration et obtenir l'imperméabilité à l'eau ;
   - la forte perméabilité à l'eau des couches unitaires ;
   - dans le cas particulier des supports anciens :
      . l'exclusion de certains supports (cf. le D.T.U. n° 26.1 de mai 1990, chapitre 11) comme les supports en pisé, torchis ou adobe parce que de cohésion trop faible ;
      . les faibles résistances au jeune âge pour les mortiers fortement dosés en chaux aérienne qui les rendent vulnérables aux conditions extérieures (pluie, soleil, vent, etc.).
   - les risques de faïençage, voire de fissuration ou de décollement par plaques lors du vieillissement de ce type d'enduit, par suite des aléas climatiques qui peuvent engendrer des tensions différentielles entre les couches.
2- Pour réaliser des enduits extérieurs de façades, on connaît également la famille des mortiers destinés à la réalisation des enduits "monocouche" d'imperméabilisation. Ces enduits sont toujours formulés (dosés et adjuvantés avec précision) et fabriqués en usine et livrés en sacs (ou silos mobiles), prêts à gâcher, pour répondre aux exigences des supports neufs et obtenir une grande rapidité d'exécution.

L'application de ces enduits "monocouche" se fait le plus souvent par projection mécanique en une passe ou en deux passes successives frais sur frais, le temps d'attente entre deux passes n'excédant pas 24 heures.

Ces enduits "monocouche" assurent le dressage, l'imperméabilisation à l'eau et la décoration avec une épaisseur de recouvrement d'au moins 10 mm en tous points contre 15 mm minimum pour un enduit bicouches conforme au D.T.U. n° 26.1 précité.

L'obtention de ces résultats est due notamment :
- à l'utilisation de liants, généralement à dominante ciment Portland qui confère l'adhérence et les résistances au jeune âge ;
- à une courbe granulométrique bien adaptée ;
- à l'utilisation d'adjuvants qui influent sur la rhéologie, la capillarité, la vitesse de prise, la couleur, etc.

Dans la plupart des cas, ces enduits "monocouche" sont destinés à :
- des supports neufs, conformes aux normes D.T.U. les concernant, notamment le D.T.U. 20.1 et le D.T.U. 23.1, tels que :
   . béton de granulats courants ;
   . béton plein d'argile expansée ou schiste expansé, pouzzolane ou laitier expansé ;
   . maçonneries brutes de briques et blocs de terre cuite (NF P 13-301 et 305), de blocs pleins ou creux de granulats courants (NF P 14-301) ou légers (NF P 14-304) ;
   . maçonneries de blocs de béton cellulaire autoclavé (NF P 14-306) y compris celles montées à joints collés ;
   . maçonneries de pierres ou de moellons.
- des supports anciens en maçonnerie ou en béton non enduits ou enduits au mortier de liants hydrauliques à l'exclusion de tous les autres.

Certains enduits "monocouche" d'imperméabilisation peuvent être appliqués sur d'autres supports anciens tels que :
- maçonneries anciennes de pierres et de moellons ;
- maçonneries anciennes de briques pleines ou perforées de terre cuite,
sous réserve qu'ils soient utilisés comme des bicouches en ce sens que, dans ce cas, on applique dans un premier temps une couche d'égalisation, puis après 1 à 3 jours selon le cas, une couche de finition.

Par contre, d'autres supports du bâti ancien constitué d'éléments de maçonneries de faible cohésion (pisé, torchis, adobe) sont exclus du domaine d'emploi de ces enduits "monocouche".

Jusqu'à présent, l'utilisation des enduits "monocouche" s'est limitée à la rénovation (remise à neuf) de supports anciens et non à la restauration (réfection ou reconstitution à l'identique).

Par rapport aux techniques précitées, il est apparu intéressant de mettre au point une nouvelle formule d'enduits monocouche d'imperméabilisation répondant aux exigences habituelles des enduits monocouche (applicables en machine à projeter en une couche, dressage, imperméabilisation et décoration et, évidemment, adhérence sur une classe de supports bien définis) tout en profitant des propriétés de certains mortiers d'enduits traditionnels à liant faiblement hydraulique (acquisition lente des résistances et perméabilité à la vapeur) permettant d'étendre le champ des supports autorisés.

### Description sommaire de l'invention

La présente invention concerne donc une famille d'enduits monocouche d'imperméabilisation permettant d'atteindre les objectifs précités.

Plus précisément, la présente invention a pour objet une famille d'enduits monocouche d'imperméabilisation adaptés pour les supports neufs ou anciens autorisés pour les enduits "monocouche" connus, caractérisés par le fait que l'enduit est préparé à partir d'un produit comprenant :
- un liant constitué de (en % en poids rapporté au poids du produit sec) :
   . 3 à 8 % de ciment Portland ;
   . 0 à 6 % de chaux aérienne ;
   . 8 à 18 % de chaux hydraulique naturelle.
- des fillers dont la granulométrie s'étale généralement de 0 à 100 microns ;
- des granulats composés de sables siliceux, calcaires et/ou silico-calcaires, composant une courbe granulométrique dont le maximum ne dépasse pas, de préférence, 5 mm ;
- des additifs chimiques pour régler la rhéologie, la rétention d'eau, la prise et le durcissement de l'enduit après gâchage dudit produit, ainsi que la densité et la stabilité de la densité de la pâte d'enduits monocouche d'imperméabilisation ;
- au moins un agent hydrofuge,
et en ce que l'enduit durci a une densité comprise entre 1,1 et 1,55 (bornes incluses) selon la norme EN 196-1.

Selon une variante préférée, l'invention a également pour objet une famille d'enduits monocouche d'imperméabilisation adaptés pour tous types de supports en maçonnerie ou en béton, y compris les supports anciens de faible cohésion (pisé, torchis ou adobe), caractérisés par le fait que l'enduit est préparé à partir d'un produit comprenant :
- un liant constitué de (en % en poids rapporté au poids du produit sec) :
   . 3 à 5 % de ciment Portland ;
   . 0 à 6 % de chaux aérienne ;
   . 8 à 18 % de chaux hydraulique naturelle.
- des fillers dont la granulométrie s'étale généralement de 0 à 100 microns ;
- des granulats composés de sables siliceux, calcaires et/ou silico-calcaires, composant une courbe granulométrique dont le maximum ne dépasse pas, de préférence, 5 mm ;
- des charges allégeantes, de préférence de la vermiculite expansée et/ou perlite expansée;
- des additifs chimiques pour régler la rhéologie, la rétention d'eau, la prise et le durcissement de l'enduit après gâchage dudit produit, ainsi que la densité et la stabilité de la densité de la pâte d'enduits monocouche d'imperméabilisation ;
- au moins un agent hydrofuge,
et en ce que l'enduit a une densité de l'enduit durci comprise entre 1,2 et 1,5 (bornes incluses) selon la norme EN 196-1.

### Description détaillée de l'invention

De préférence, le liant rentrant dans la composition du produit destiné à la préparation de l'enduit monocouche d'imperméabilisation est composé de (en % en poids rapporté au poids du produit sec) :
- 3,5 à 5,5 % en poids de ciment Portland ;
- 0 à 6 % en poids de chaux aérienne ;
- 8 à 15 % de chaux hydraulique naturelle.

Toutefois, dans le cas d'un enduit destiné à restaurer un support ancien de faible cohésion, il est préférable que la quantité en ciment Portland soit au plus égale à 4 %, et encore mieux, que l'indice d'hydraulicité du liant reste inférieur à 0,16.

Le produit servant à la préparation de l'enduit monocouche de la présente invention renferme des fillers dont la granulométrie s'étale généralement entre 0 et 100 microns. De préférence, on utilise des fillers calcaires. De préférence encore, la quantité des fillers varie de 0 à 15 % en poids rapporté au poids total du produit sec.

Le produit servant à la préparation des enduits monocouche de la présente invention renferme également des additifs chimiques dont :
- un ou plusieurs agents de rhéologie et de rétention dans des proportions allant généralement de 0,05 à 0,20 % en poids rapporté au poids total du produit sec. De préférence, cet agent est choisi parmi les dérivés cellulosiques, encore mieux parmi les éthers cellulosiques ;
- un ou plusieurs agents entraîneurs d'air, si cette fonction n'est pas déjà apportée par un agent de rhéologie et de rétention de composition chimique particulière. Cet agent entraîneur d'air est prévu pour ajuster la densité du produit gâché sous forme de pâte ainsi que la stabilité de la densité de cette pâte. La quantité de l'agent entraîneur d'air peut varier de 0 à 0,02 % en poids rapporté au poids total du produit sec ;
- un ou plusieurs catalyseurs d'hydratation des liants hydrauliques siliciques, tels que, par exemple, le chlorure de calcium et/ou le chlorure de sodium et/ou le formiate de calcium. Dans le cas d'un catalyseur chloré, il est recommandé de prévoir une quantité de cet agent telle que la teneur en ion chlorure soit au plus égale à 1 % en poids rapporté au poids de ciment Portland. Sinon, dans le cas de la présence d'une armature en acier dans l'enduit, on prévoit une teneur en ion chlorure au plus égale à 0,65 % en poids rapporté au poids de ciment Portland. Dans le cas d'un catalyseur non chloré, une quantité de catalyseur pouvant aller jusqu'à 3 % en poids, rapporté au poids de ciment Portland, est généralement utilisée.

Le produit servant à la préparation des enduits monocouche de la présente invention renferme également un ou plusieurs agents hydrofuges. Ces agents peuvent être solubles ou insolubles dans l'eau et sont utilisés généralement dans des proportions pouvant aller de 0,10 à 0,35 % en poids rapporté au poids total du produit sec. De préférence on choisit des sels métalliques d'acides organiques tels que, par exemple, l'oléate de soude ou de potassium, le stéarate de zinc, magnésium et/ou calcium.

Eventuellement, mais avantageusement, le produit servant à la préparation de l'enduit monocouche de la présente invention renferme une ou plusieurs charges allégeantes, de préférence la vermiculite expansée et/ou la perlite expansée, de préférence encore, dans des proportions inférieures ou égales à 5 % en poids rapporté au poids total du produit sec. Ces charges allégeantes permettent avantageusement de limiter le module d'élasticité de l'enduit durci, mesuré dans les conditions de la norme NF B 10511.

Dans le cas des enduits monocouche de restauration servant à imperméabiliser et décorer un support ancien de faible cohésion, la quantité de charge allégeante est avantageusement comprise entre 1 et 2 % en poids rapporté au poids total du produit sec, de façon à limiter le module d'élasticité de l'enduit durci en deçà de 3500 MPa (selon EN 196-1).

Le produit servant à la préparation des enduits monocouche de la présente invention renferme également des granulats composés de sables siliceux, calcaires et/ou silico-calcaires composant une courbe granulométrique dont le maximum ne dépasse pas 5 mm. La quantité en ces granulats est telle qu'elle soit complémentaire à 100 % en poids de la somme des pourcentages en poids (rapporté au poids total du produit sec) des autres composés du produit. De préférence, la quantité de granulats est au moins égale à 50 % en poids rapporté au poids total du produit sec.

Bien entendu, le produit servant à la préparation des enduits monocouche selon la présente invention peut éventuellement renfermer d'autres composés rentrant usuellement dans la composition des enduits monocouche d'imperméabilisation tels que, par exemple, des pigments de coloration, des fibres, des résines synthétiques et/ou des agents fongicides, sous réserve que ces composés additionnels ne conduisent pas à une élévation sensible de la densité de l'enduit ni à une élévation sensible de son module d'élasticité.

La présente invention a également pour objet un procédé de préparation des enduits monocouche d'imperméabilisation selon la présente invention qui consiste à mélanger dans un malaxeur l'ensemble des constituants secs, conditionnés de façon avantageuse dans un sac ou récipient prêt à l'emploi, fabriqués en usine, desdits enduits avec l'eau de gâchage. La proportion d'eau de gâchage peut varier de 15 à 30 % en poids rapporté au poids total du produit sec.

Dans le cas de la présence de charges allégeantes, la proportion d'eau de gâchage varie de préférence entre 19 et 30 % en poids rapporté au poids total du produit sec. Le malaxage peut être effectué en bétonnière ou en machine à projeter, telle que, par exemple, machine à projeter à gâchage discontinu ou continu (i.e. machine à mortier). La durée du malaxage est de 30 secondes minimum mais plus généralement de l'ordre de 5 min., et le temps d'utilisation de la gâchée peut varier entre environ un quart d'heure et environ 1 heure.

Les conditions d'application sont celles habituellement utilisées pour les enduits monocouche connus à cette date.

L'application ne doit pas être réalisée en cas de risque de gel ou au delà de 35°C. En outre, il est conseillé de ne pas appliquer par temps froid (moins de 5°C).

Eventuellement, selon le cas, les supports à enduire seront préparés avant l'application de l'enduit monocouche d'imperméabilisation, de façon bien connue de l'homme de l'art, et plus particulièrement dans le cas du bâti ancien, pour :
- élimination les parties friables ou peu ou non adhérentes ;
- réparation des parois (remplacement des éléments manquants et consolidation si nécessaire) ;
- traitement des joints de maçonneries ;
- nettoyage et dépoussiérage du support ;
- traitement des fissures et des défauts importants ;
- traitement des maçonneries humides contre les remontées capillaires ;
- par temps chaud, humidification du support ;
- en cas de présence de parties métalliques, application d'un primaire antirouille et élimination de toute trace de rouille ;
- éventuellement, fixation d'une armature, métallique ou non ;
- éventuellement, enduction du support d'une première couche d'un produit réalisant un pont d'adhérence entre le support et l'enduit monocouche d'imperméabilisation et/ou apportant de la cohésion au support

Ensuite, l'enduit monocouche d'imperméabilisation selon l'invention est appliqué :
- en une ou deux passes, frais sur frais, dans le cas d'un support neuf ;
- en une ou plusieurs passes, dans le cas d'un support ancien.

Pour l'obtention d'une finition décoration, dans le cadre de l'invention, il suffit simplement, dès raffermissement suffisant de la dernière passe de dressement, d'appliquer, frais sur frais, une passe destinée à donner l'aspect décoratif et de traiter la passe de décoration, selon des techniques bien connues de l'homme de l'art.

Outre les avantages précités, les enduits monocouche de la présente invention présentent les avantages qui suivent, malgré leur faible teneur en liant hydraulique :
- la rapidité d'exécution puisqu'une attente inférieure à 24 heures, et généralement de 2 à 5 heures entre les passes suffit ;
- une bonne imperméabilité à l'eau assurée par une couche d'enduit d'au moins 10 mm d'épaisseur en tous points ainsi qu'une bonne perméance à la vapeur d'eau ;
- des résistances mécaniques au jeune âge suffisantes vis à vis des conditions extérieures (pluie, soleil, vent) dans des conditions normales d'application et d'utilisation, avec une acquisition progressive des résistances avec le durcissement ;
- une bonne adhérence aussi bien sur les supports neufs et anciens ;
- des épaisseurs d'application en monocouche pouvant atteindre 25 mm, sous réserve évidemment que les règles de l'art soient respectées ;
- une extension du champ des supports autorisés, plus spécialement grâce à la famille d'enduits monocouche d'imperméabilisation adaptés, en particulier, pour les supports anciens y compris ceux de faible cohésion (pisé, torchis, adobe) ;
- dans le cas de la restauration du bâti ancien, une finition à aspect ancien, c'est-à-dire aussi bien des finitions brutes ou talochées avec les outils du maçon traditionnel ou des finitions plus structurées (telles que mouchetis, raclées) que des finitions plus fines (telles que talochées, feutrées, lissées, rabotées) réalisées par des artisans ou des maçons ou des façadiers.

### Exemple

L'invention va maintenant être illustrée au travers d'un exemple d'un enduit monocouche d'imperméabilisation adapté pour la restauration, c'est-à-dire la réfection ou la reconstitution à l'identique d'un support ancien.

Un enduit monocouche d'imperméabilisation conforme à l'invention a été préparé à partir d'un produit sec, renfermant (en % en poids rapporté au poids total du produit sec) :
- chaux hydraulique naturelle 8 %
- ciment Portland 5 %
- chaux aérienne 6 %
- filler calcaire 3 %
- sables siliceux (100 à 400 microns) 30 %
- agent hydrofuge 0,3 %
- éther cellulosique de moyenne viscosité 0,11 %
- entraîneur d'air 0,01 %
- formiate de calcium 0,05 %
- vermiculite expansée 1,4 %
- sables calcaires (400 microns à 2 mm) en quantité complémentaire à 100 %

La proportion d'eau de gâchage est de 20 à 22 % en poids, rapporté au poids du produit sec. Le malaxage a été réalisé dans une machine à projeter à gâchage discontinu et la durée de malaxage a été de 5 minutes minimum.

Cet enduit a été appliqué notamment sur un support en pisé, dans les conditions suivantes :
- dépoussiérage soigné au pistolet à air ;
- pose d'une armature métallique galvanisée conforme au D.T.U. n° 26.1, fixée solidement dans la maçonnerie ;
- application d'un gobetis fluide d'enduit pour humidifier le support et augmenter sa cohésion ;
- après 1 heure, application de la passe de dressement (épaisseur variable de 10 à 20 mm) et dressement à la règle de cette passe ;
- après 1 nuit (12 heures) d'attente, application de la passe de finition, brute de projection.

L'épaisseur cumulée de passes varie de 10 à 25 mm.

Les performances atteintes par cet enduit sont les suivantes :
- densité de l'enduit durci : 1,37
- module d'élasticité (NF B 10511)
   - à 7 jours 2500 MPa ;
   - à 28 jours 3000 MPa ;
- perméance à la vapeur d'eau : 0,85 g/m².h.mmHg (selon le Cahier Technique n° 2669-4 du CSTB-Juillet-Août 93)
- indice d'hydraulicité : 0,15

## Revendications

1. Enduits monocouche d'imperméabilisation adaptés pour les supports neufs ou anciens autorisés pour les enduits "monocouche" connus, caractérisés par le fait que l'enduit est préparé à partir d'un produit comprenant :
- un liant constitué de (en % en poids rapporté au poids du produit sec) :
. 3 à 8 % de ciment Portland ;
. 0 à 6 % de chaux aérienne ;
. 8 à 18 % de chaux hydraulique naturelle.
- des fillers dont la granulométrie s'étale généralement de 0 à 100 microns ;
- des granulats composés de sables siliceux, calcaires et/ou silico-calcaires, composant une courbe granulométrique dont le maximum ne dépasse pas, de préférence, 5 mm ;
- des additifs chimiques pour régler la rhéologie, la rétention d'eau, la prise et le durcissement de l'enduit après gâchage dudit produit, ainsi que la densité et la stabilité de la densité de la pâte d'enduits monocouche d'imperméabilisation ;
- au moins un agent hydrofuge,
et en ce que l'enduit durci a une densité comprise entre 1,1 et 1,55 (bornes incluses) selon la norme EN 196-1.

2. Enduits selon la revendication 1, adaptés pour tous types de supports en maçonnerie ou en béton, y compris les supports anciens de faible cohésion (pisé, torchis ou adobe), et caractérisés par le fait que l'enduit est préparé à partir d'un produit comprenant :
- un liant constitué de (en % en poids rapporté au poids du produit sec) :
. 3 à 5 % de ciment Portland ;
. 0 à 6 % de chaux aérienne ;
. 8 à 18 % de chaux hydraulique naturelle.
- des fillers dont la granulométrie s'étale généralement de 0 à 100 microns ;
- des granulats composés de sables siliceux, calcaires et/ou silico-calcaires, composant une courbe granulométrique dont le maximum ne dépasse pas, de préférence, 5 mm ;
- des charges allégeantes, de préférence de la vermiculite expansée et/ou perlite expansée ;
- des additifs chimiques pour régler la rhéologie, la rétention d'eau, la prise et le durcissement de l'enduit après gâchage dudit produit, ainsi que la densité et la stabilité de la densité de la pâte d'enduits monocouche d'imperméabilisation ;
- au moins un agent hydrofuge,
et en ce que l'enduit durci a une densité comprise entre 1,2 et 1,5 (bornes incluses) selon la norme EN 196-1.

3. Enduits selon la revendication 1, caractérisés en ce que le liant est composé de (en % en poids rapporté au poids du produit sec) :
- 3,5 à 5,5 % en poids de ciment Portland ;
- 0 à 6 % en poids de chaux aérienne ;
- 8 à 15 % de chaux hydraulique naturelle.

4. Enduits selon la revendication 2, caractérisés en ce que la quantité en ciment Portland est au plus égale à 4 % en poids rapporté au poids total du produit sec.

5. Enduits selon la revendication 4, caractérisés en ce que l'indice d'hydraulicité du liant reste inférieur à 0,16.

6. Enduits selon l'une quelconque des revendications précédentes, caractérisés en ce que les fillers sont des fillers calcaires.

7. Enduits selon l'une quelconque des revendications précédentes, caractérisés en ce que la quantité des fillers varie de 0 à 15 % en poids rapporté au poids total du produit sec.

8. Enduits selon l'une quelconque des revendications précédentes, caractérisés en ce que le produit renferme un ou plusieurs agents de rhéologie et de rétention d'eau dans des proportions allant généralement de 0,05 à 0,20 % en poids rapporté au poids total du produit sec.

9. Enduits selon l'une quelconque des revendications précédentes, caractérisés en ce que le produit renferme un ou plusieurs agents entraîneurs d'air dans des proportions allant généralement de 0 à 0,02 % en poids rapporté au poids total du produit sec.

10. Enduits selon l'une quelconque des revendications précédentes, caractérisés en ce que le produit renferme un ou plusieurs catalyseurs d'hydratation des liants hydrauliques siliciques.

11. Enduits selon la revendication 10, caractérisés en ce que le catalyseur est le formiate de calcium, dans une proportion pouvant atteindre 3 % en poids rapporté au poids total de ciment Portland.

12. Enduits selon la revendication 10, caractérisés en ce que le catalyseur est un catalyseur chloré et que la quantité de cet agent est telle que la teneur en chlore soit au plus égale à 1 % en poids, rapporté au poids de ciment Portland, ou une teneur en chlore limitée à 0,65 % en poids, rapporté au poids de ciment Portland dans le cas de la présence d'une armature en acier dans l'enduit.

13. Enduits selon l'une quelconque des revendications précédentes, caractérisés en ce que le produit renferme un ou plusieurs agents hydrofuges dans des proportions pouvant aller de 0,1 à 0,35 % en poids rapporté au poids total du produit sec.

14. Enduits selon l'une quelconque des revendications 1, 3 et 6 à 13, caractérisés en ce que le produit renferme une ou plusieurs charges allégeantes dans des proportions inférieures ou égales à 5 % en poids rapporté au poids total du produit sec.

15. Enduits selon la revendication 2 et 4 à 13, caractérisés en ce que le produit renferme une ou plusieurs charges allégeantes dans des proportions comprises entre 1 et 2 % en poids rapporté au poids total du produit sec, et en ce que le module d'élasticité de l'enduit durci est inférieur à 3500 MPa (EN 196-1).

16. Enduits selon les revendications 1 et 3 à 13, caractérisés en ce que la proportion d'eau de gâchage varie de 15 à 30 % en poids rapporté au poids total de produit sec.

17. Enduits selon les revendications 2 à 13, caractérisés en ce que la proportion d'eau de gâchage varie de 19 à 30 % en poids rapporté au poids total de produit sec.

18. Enduits monocouche d'imperméabilisation durcis, adaptés pour les supports neufs ou anciens autorisés pour les enduits "monocouche" connus et obtenus à partir de l'un quelconque des produits définis dans les revendications 1 et 3 à 17.

19. Enduits monocouche d'imperméabilisation durcis, adaptés pour tous types de supports en maçonnerie ou en béton, y compris les supports anciens de faible cohésion (pisé, torchis, adobe) et obtenus à partir de l'un quelconque des produits définis dans les revendications 2, 4 à 13, 15 et 17.

20. Enduits monocouche d'imperméabilisation selon l'une quelconque des revendications précédentes, caractérisés en ce qu'ils sont fabriqués en usine et présentés dans un conditionnement prêt à l'emploi.

21. Procédé de réalisation des enduits monocouche d'imperméabilisation définis dans l'une quelconque des revendications 1 à 20, selon lequel on effectue le gâchage de l'ensemble des constituants secs, le malaxage et l'application sur le support à l'aide d'une machine à projeter.
